# EUROPEAN PATENT APPLICATION

(11) **EP 1 658 791 A1**
(43) Date of publication of application: **24.05.2006**
(21) Application number: 05257024.9
(22) Date of filing: 14.11.2005
(51) Int. Cl.: A47G 7/04, F16G 15/08

(54) **Hanging basket support device**

(30) Priority: 18.11.2004 GB 0425384; 17.02.2005 GB 0503321
(71) Applicant: Whitaker, Peter Dudley, 1022 Bristol Road - Selly Oak Birmingham, B29 6LG (GB)
(72) Inventor: Whitaker, Peter Dudley, 1022 Bristol Road - Selly Oak Birmingham, B29 6LG (GB)

(57) **Abstract**

A support device, especially but not exclusively, for suspending a plant holder such as a hanging basket. It has a loop (18) which is hooked over the support arm (16) and a lower loop (4) into which the basket hook (3) is engaged. It enables the basket to be rotated about the suspension with the weight of the basket being supported by the device. The device incorporates a locking mechanism, consisting of disc (11) with a multi-sided central hole which engages with spigot (10) which has an external profile matching this hole. The mechanism can be unlocked by lifting the disc and re-locked by releasing the disc without the need to support the weight of the basket. The locking mechanism allows the basket to be locked in several positions, typically six.

## Description

This invention relates to a support device especially but not exclusively for suspending a plant holder, for example a hanging basket

A hanging basket can be supported by chains from an eyelet mounted on a hook at the end of a wall bracket.

The owner of a hanging basket may wish to turn the basket about a vertical axis, e.g. because the plants are not showing their best aspect to view. Rotatable suspension devices are known, for example that of US Patent 3957242. These allow the basket to turn freely but what would be best is a capability to turn the basket to a chosen position whereupon it remains there.

Also, the known suspension arrangements may require the basket (which can be extremely heavy) to be lifted before it can be turned.

Thus, an object of the invention is to enable a hanging basket or the like, or other suspended device, to be more easily adjusted about a vertical axis.

According to the invention, there is provided a support device comprising a first member for engagement with a support, a second member for engagement with a device to be supported, and engagement means coupled to the two members and operable for being released to permit the two members to turn one with respect to the other.

Preferably, the engagement means can be released without having to take up, for example lift, the suspended device.

For a better understanding of the invention and to show how the same may be carried into effect reference will now be made by way of example to the accompanying drawings, in which:
Figures 1 and 2 are respectively plan and a side view of a plant holder suspension device.
Figure 3 is a section on the line I-I in Figure 1; and
Figure 4 is a perspective view showing the device in use for supporting a plant holder.

The suspension device is for use in supporting a hanging basket 1 having suspension chains 2 fixed to an eyelet 3. The eyelet 3 is suspended from a flat loop 4 forming part of the device.

As well as the loop 4, the device comprises a hexagonal member 5 having a vertical central hole 6 therethrough. A bolt 7 is engaged through the hole 6 and, beneath the member 5, a thick washer 8 and a nut 9 are engaged on the lower end of bolt 7. The bolt 7 has a hexagonal head 10 and loosely located thereon is an annular member 11 having a hexagonal aperture extending therethrough.

Suspended from a bracket 16 fixed to the wall 17 where the hanging basket is to be mounted, there is an inverted U-shaped loop 18 having limbs 19 extending down through respective vertical holes 20 each side of the axis 25 of the bolt 7.

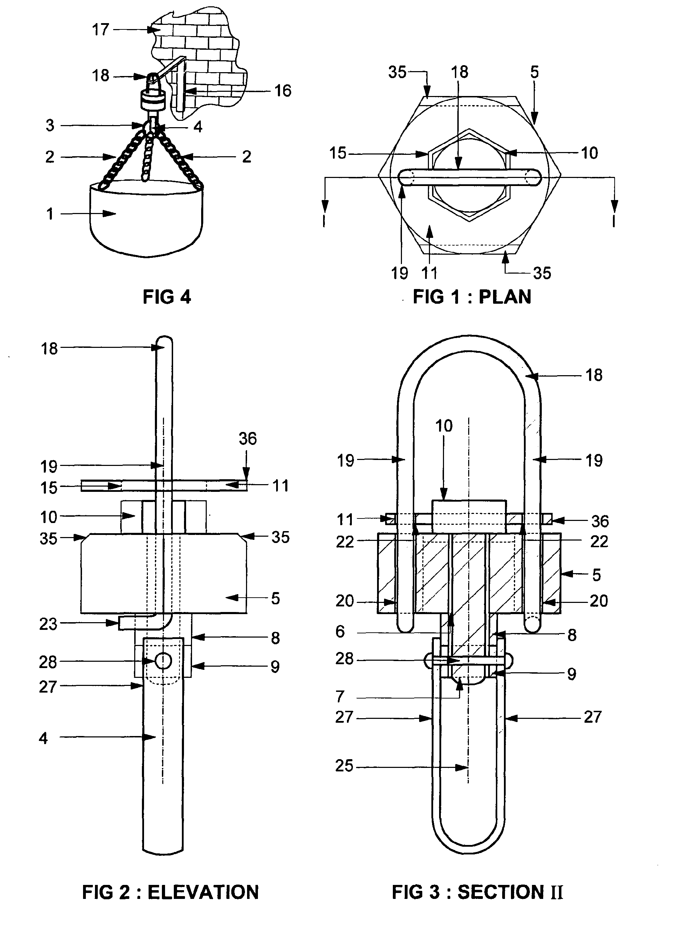

The annular member 11 has two holes 22 through which the limbs extend. The member 11 is loosely mounted on the head 10 of the bolt 7 so that it can be lifted to above the head 10 of the bolt as shown in Figure 2. Normally however the member 11 will drop down over the bolt head provided the hexagonal aperture 15 is aligned with the bolt head 10.

The upper ends 27 of loop 4 are fixed to nut 9 via a rivet 28 extending through holes formed in loop ends 27 and nut 9.

The lower ends of the limbs 19 of loop 18 are tuned over to form bent portions 23 beneath the hexagonal member 5 so that the loop 18 will take the weight of the hanging basket via the loop 4 and the head 10 of the bolt 7.
When the annular member1 1 is lifted as shown in Figure 2 and disengaged from the head 10 of bolt 7, the bolt 7 along with the U-shaped loop 4 can turn about axis 25.

Thus in this state, the hanging basket can be turned about axis 25.

The rotation is constrained by the aperture 15 of the annular member 11 being dropped down over the bolt head 10. Because the aperture 15 and the head 10 are hexagonal, the hanging basket can be turned to any one of six positions around axis 25.

Aperture 15 and head 10 could have a different number of sides to provide a different number of positions for the hanging basket.

During adjustment, the bolt 7 and loop 4 turn relative to member 5. During such turning, the upper ends of loop 4 might foul the lower end 23 of the limbs of loop 18. It is the function of the relatively thick spacer 8 to prevent such fouling. However, if the turned ends 23 were recessed into member 5 or if the ends of the limbs were brazed into member 5 say, the thick spacer would not be required. It could be discarded or it could be replaced by a relatively thin washer.

The part 5 need not be hexagonal in cross-section; it could be a plain cylinder.

The corners 35 of the two facets of the member 5 are bevelled so that the rim of the member 11 can be more easily grasped and lifted. If the member11 were to be larger in diameter than the dimension across the flats of member 5 there would be no need for the bevels.

Because the illustrated device is for use outside, it is preferably made of corrosion resistant material. For example, it could be made of plastics material or of metal which is rust resistant. At least the part 5 is advantageously of plastics material, preferably moulded of plastics material.

The illustrated device is not only useful for supporting a suspended device. For example, it may be used where a horizontally directed strain exits between two items connected to respective ones of two loops or hooks, and one of which is to be turnable relative to the other.

## Claims

1. A support device comprising a first member for engagement with a support, a second member for engagement with a device to be supported, and engagement means coupled to the two members and operable for being released to permit the two members to turn one with respect to the other.

2. A support device according to Claim 1, wherein the engagement means is releasable without having to balance the force taken by the device to be supported.

3. A support device substantially as hereinbefore described with reference to the accompanying drawing.
